# EUROPEAN PATENT APPLICATION

(11) **EP 4 024 301 A1**
(43) Date of publication of application: **06.07.2022**
(21) Application number: 21217791.9
(22) Date of filing: 27.12.2021
(51) Int. Cl.: G06Q 10/06, G06Q 10/10

(54) **BUSINESS SYSTEM AUTOMATIC ALARM DEVICE AND METHOD, AND COMPUTER APPARATUS**

(30) Priority: 30.12.2020 CN 202011620166
(71) Applicant: Shenzhen Sekorm Component Network Co., Ltd, Shenzhen, Guangdong (CN)
(72) Inventor: ZHANG, Jiyue, Shenzhen (CN)
(74) Representative: Westphal, Mussgnug & Partner, Patentanwälte mbB

(57) **Abstract**

The present invention relates to a business system automatic alarm device and method, and a computer apparatus. In the business system automatic alarm device, an alarm-notifying object receiving unit is configured for defining an alarm-notifying object; an alarm channel receiving unit is configured for defining an alarm channel; an alarm content receiving unit is configured for receiving alarm contents; and an alarm triggering interface unit is configured for monitoring if a preset business item exhibits abnormality. Each preset business item corresponds to one alarm triggering interface unit. The alarm-notifying object, the alarm channel, and the alarm contents to which each preset business item corresponds are defined and stored, such that when the alarm triggering interface unit identifies abnormality exhibited in the preset business item, the alarm channel to which said preset business item corresponds is used to transmit the corresponding alarm contents to the corresponding alarm-notifying object. The present invention uses a unified and configurable automatic alarm device to define the alarm-notifying object and the alarm channel for each business item, so as to realize unified and standardized management for business alarm and enhance management efficiency.

## Description

### FIELD OF THE INVENTION

The present invention relates to the field of management of business systems, and more particularly to a business system automatic alarm device and method, and a computer apparatus.

### DESCRIPTION OF THE RELATED ART

A business system of a company often includes various businesses of different sizes, and each of the businesses is handled and managed by a different team. If a business alarm occurs online, then it is necessary to timely notify the person who is in charge of a related team. In this disclosure, the person in charge may include persons of various roles, including persons responsible for business management, operation, development, test, and product, among which some must be notified, while the others may only be optionally notified according to the actual scenarios. Different types of business alarms require being received by different persons, and different scenarios require different ways of receiving. An existing way of alarm notification generally relies on manpower, or each business may establish a different way of alarm issuance, all these leading to chaos in management.

### SUMMARY OF THE INVENTION

The technical issue that the present invention aims to resolve is to provide, in view of the above-described deficiency of the prior art, a business system automatic alarm device and method, and a computer apparatus.

The technical solution that the present invention adopts to resolve the technical issue is to construct a business system automatic alarm device, which comprises an alarm-notifying object receiving unit, an alarm channel receiving unit, an alarm content receiving unit, and an alarm triggering interface unit;
the alarm-notifying object receiving unit configured for defining an alarm-notifying object, the alarm channel receiving unit configured for defining an alarm channel, the alarm content receiving unit configured for receiving alarm contents, the alarm triggering interface unit configured for monitoring if a preset business item exhibits abnormality, each said preset business item corresponding to one alarm triggering interface unit;
the alarm-notifying object, the alarm channel, and the alarm contents to which each said preset business item corresponds being defined and stored, such that when the alarm triggering interface unit identifies abnormality exhibited in said preset business item, the corresponding alarm contents are transmitted to the corresponding alarm-notifying object through the alarm channel to which said preset business item corresponds.

Further, in the business system automatic alarm device according to the present invention, the alarm-notifying object receiving unit comprises a self-defined object unit and a default object unit;
the self-defined object unit configured for defining a self-defined object of each said preset business item;
the default object unit configured for defining a default object to which each alarm of said preset business item must be transmitted.

Further, in the business system automatic alarm device according to the present invention, the alarm-notifying object receiving unit further comprises an ultimate object unit, the ultimate object unit storing an ultimate transmitting object;
in case that a user does not set up the self-defined object unit and the default object unit, the ultimate transmitting object serving as an alarm-notifying obj ect.

Further, in the business system automatic alarm device according to the present invention, the alarm channel receiving unit comprises a mail receiving unit, the mail receiving unit configured for receiving a mail address and a mail template of the alarm-notifying object; and/or
the alarm channel receiving unit comprises a short message receiving unit, the short message receiving unit configured for receiving a short message address and a short message template of the alarm-notifying object.

Further, in the business system automatic alarm device according to the present invention, the alarm content receiving unit comprises an alarm template and an alarm parameter acquiring unit;
the alarm template providing an alarm content fill-in template;
the alarm parameter acquiring unit configured for acquiring an alarm parameter corresponding to a current alarm.

Further, the present invention also provides a business system automatic alarm method, which comprises:
S1, receiving and storing an alarm triggering interface unit, an alarm-notifying object, an alarm channel, and alarm contents corresponding to each preset business item;
S2, the alarm triggering interface unit monitoring if the preset business item exhibits abnormality; and
S3, if yes, transmitting, through the alarm channel to which said preset business item corresponds, the corresponding alarm contents to the corresponding alarm-notifying object.

Further, in the business system automatic alarm method according to the present invention, the alarm-notifying object comprises a self-defined object and a default object;
the self-defined object being a required individualized object for each said preset business item;
the default object being an object to which each alarm of said preset business item must be transmitted.

Further, in the business system automatic alarm method according to the present invention, the alarm-notifying object further comprises an ultimate transmitting object;
in case that a user does not set up the self-defined object and the default object, the ultimate transmitting object serving as an alarm-notifying object.

Further, in the business system automatic alarm method according to the present invention, the alarm channel comprises a mail address and a mail template, and in Step S3, transmitting, through the alarm channel to which said preset business item corresponds, the corresponding alarm contents to the corresponding alarm-notifying object comprises: transmitting, through the mail address and the mail template to which aid preset business item corresponds, the corresponding alarm contents to the corresponding alarm-notifying object; and/or
the alarm channel comprises a short message address and a short message template, and in S3, transmitting, through the alarm channel to which said preset business item corresponds, the corresponding alarm contents to the corresponding alarm-notifying object comprises: transmitting, through the short message address and the short message template to which aid preset business item corresponds, the corresponding alarm contents to the corresponding alarm-notifying object;
the alarm contents comprising an alarm parameter corresponding a current alarm.

Further, the present invention also provides a computer apparatus, which comprises the business system automatic alarm device described above; or
the computer apparatus comprising a processor and a storage, the storage storing a computer program, the processor executing the computer program stored in the storage, in order to implement the business system automatic alarm method described above.

Implementation of the business system automatic alarm device and method, and a computer apparatus according to the present invention provides the following beneficial effects. The present invention uses a unified and configurable automatic alarm device to define the alarm-notifying object and the alarm channel for each business item, so as to realize unified and standardized management for business alarm and enhance management efficiency.

### BRIEF DESCRIPTION OF THE DRAWINGS

A detailed description of the present invention will be provided below with reference to the attached drawings and embodiments, and in the drawings:
FIG. 1 is a schematic structural perspective view illustrating a configuration of a business system automatic alarm device according to an embodiment;
FIG. 2 is a schematic structural perspective view illustrating a configuration of a business system automatic alarm device according to an embodiment;
FIG. 3 is a schematic structural perspective view illustrating a configuration of a business system automatic alarm device according to an embodiment; and
FIG. 4 is a flow chart illustrating a business system automatic alarm method according to an embodiment.

### DETAILED DESCRIPTION OF PREFERRED EMBODIMENTS OF THE INVENTION

For better understanding of the technical features, purposes, and efficacy of the present invention, embodiments of the present invention will be described in detail with reference to the drawings.

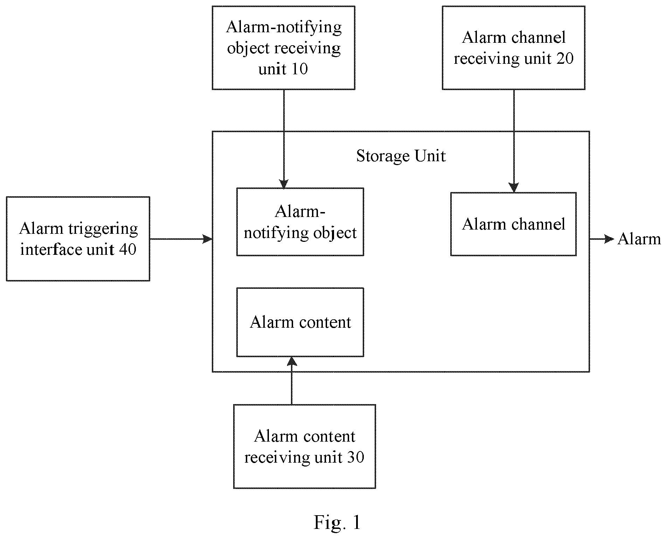

In a preferred embodiment, referring to FIG. 1, a business system automatic alarm device according to the instant embodiment comprises an alarm-notifying object receiving unit 10, an alarm channel receiving unit 20, an alarm content receiving unit 30, and an alarm triggering interface unit 40. One alarm-notifying object receiving unit 10, one alarm channel receiving unit 20, one alarm content receiving unit 30, and one alarm triggering interface unit 40 jointly form one automatic alarm device, and in the same automatic alarm device, the alarm-notifying object receiving unit 10, the alarm channel receiving unit 20, the alarm content receiving unit 30, and the alarm triggering interface unit 40 correspond to each other. A business system may include multiple automatic alarm devices.

The alarm-notifying object receiving unit 10 is configured for defining an alarm-notifying object, meaning a user may input an alarm-notifying object by means of the alarm-notifying object receiving unit 10. The alarm channel receiving unit 20 is configured for defining an alarm channel, meaning the user may input an alarm channel by means of the alarm channel receiving unit 20. The alarm content receiving unit 30 is configured for receiving alarm contents, meaning the user may input alarm contents by means of the alarm content receiving unit 30. The alarm triggering interface unit 40 is configured for monitoring if a preset business item exhibits abnormality, meaning the user may set up a preset business item to be monitored by means of the alarm triggering interface unit 40, and each preset business item corresponds to one alarm triggering interface unit 40. The alarm-notifying object, the alarm channel, and the alarm contents to which each preset business item corresponds are defined and stored, and the business system includes multiple preset business items. A corresponding relationship between each preset business item and the alarm-notifying object, the alarm channel, and the alarm contents is stored in a storage unit. In other words, a corresponding relationship of each alarm triggering interface unit 40 and the alarm-notifying object, the alarm channel, and the alarm contents is stored in the storage unit.

The alarm triggering interface unit 40 monitors if the preset business item exhibits abnormality, and the monitoring subject and the monitoring standards can be set up according to a specific content of each preset business item. The alarm triggering interface unit 40, when identifying that a specific preset business item is abnormal, reads the alarm-notifying object, the alarm channel and the alarm contents to which the preset business item corresponds from the storage unit, meaning reading the alarm-notifying object, the alarm channel, and the alarm contents to which the alarm triggering interface unit 40 corresponds from the storage unit. After the alarm-notifying object, the alarm channel, and the alarm contents to which the preset business item corresponds have been read, the alarm channel to which the preset business item corresponds is used to transmit the corresponding alarm contents to the corresponding alarm-notifying object. In other words, the alarm-notifying object, the alarm channel, and the alarm contents to which the preset business item corresponds are such that the alarm contents corresponding to the preset business item is uploaded to the alarm channel and then transmitted to the alarm-notifying object.

The instant embodiment uses a unified and configurable automatic alarm device to define the alarm-notifying object and the alarm channel for each business item, so as to realize unified and standardized management for business alarm and enhance management efficiency.

In some embodiments, the alarm-notifying object receiving unit 10 comprises a self-defined object unit 101 and a default object unit 102, wherein the self-defined object unit 101 is configured for defining a self-defined object for each preset business item, meaning for a specific business item, the user is free to set up a responsible person to whom notification and report may be made. The default object unit 102 is configured for defining a default object to which each alarm of the preset business item must be transmitted, meaning a responsible person who must be notified of each alarm of all the preset business items. Optionally, in the business system automatic alarm device of the instant embodiment, the alarm-notifying object receiving unit 10 further comprises an ultimate object unit 103, and the ultimate object unit 103 stores an ultimate transmitting object. In case that the user does not set up the self-defined object unit 101 and the default object unit 102, the ultimate transmitting object serves as an alarm-notifying object. In other words, in case that the user does set up the self-defined object unit 101 and the default object unit 102, the ultimate transmitting object does not serve as an alarm-notifying object, and alarms, when happening, will not be transmitted to the ultimate transmitting object. The instant embodiment suits the needs of the user for individualization of the alarm-notifying object, and also keeps a bottom-lime alarm-notifying object, even when no setting is made by the user, so as to ensure each alarm can be notified to a corresponding responsible person.

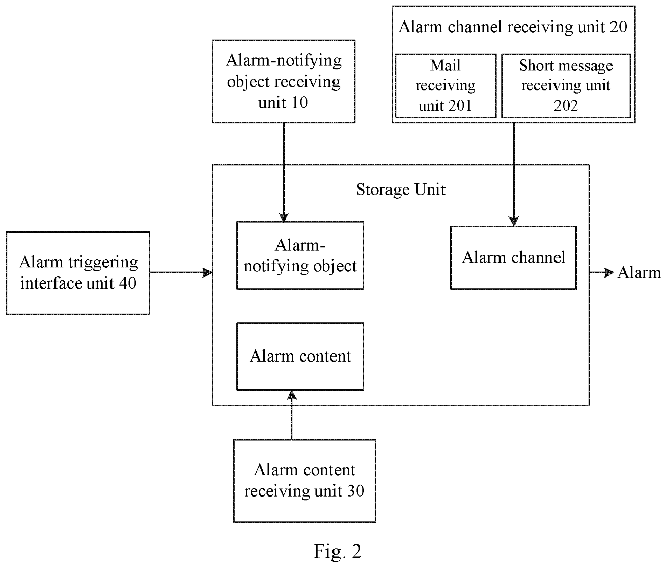

In some embodiments, referring to FIG. 2, the alarm channel receiving unit 20 comprises a mail receiving unit 201, and the mail receiving unit 201 is configured for receiving a mail address and a mail template of the alarm-notifying object, meaning the user may input the mail address and the mail template of the alarm-notifying object by means of the mail receiving unit 201, and is required to fill in the mail address and the mail template for each alarm-notifying object. The alarm triggering interface unit 40, when identifying that a specific preset business item exhibits abnormality, reads the corresponding mail address and mail template, and fills the alarm contents in the mail template, for transmission, according to the mail address, to the corresponding alarm-notifying object. The instant embodiment realizes transmission of an alarm, by means of mails, to a corresponding responsible person.

In some embodiments, referring to FIG. 2, the alarm channel receiving unit 20 comprises a short message receiving unit 202, and the short message receiving unit 202 is configured for receiving a short message address and a short message template of the alarm-notifying object, meaning the user may input the short message address and the short message template of the alarm-notifying object by means of the short message receiving unit 202, and is required to fill in the short message address and the short message template corresponding to each alarm-notifying object. The alarm triggering interface unit 40, when identifying a specific preset business item exhibits abnormality, reads the corresponding short message address and short message template, and fills the alarm contents in the short message template, and transmits, according to the short message address, the filled short message template to the alarm-notifying object. Optionally, the short message address comprises, but not limited to, a mobile phone number and instant message software account. The instant embodiment realizes transmission of an alarm, by means of short messages, to a corresponding responsible person.

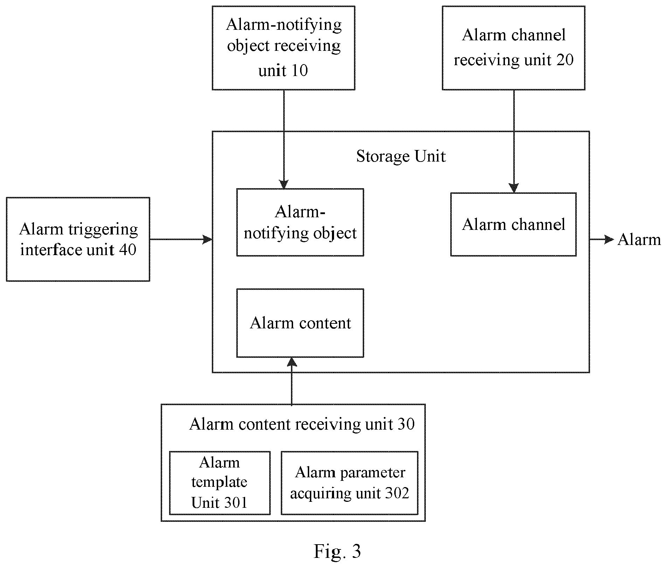

In some embodiments, referring to FIG. 3, the alarm content receiving unit 30 comprises an alarm template 301 and an alarm parameter acquiring unit 302, wherein the alarm template 301 provides an alarm content fill-in template; and the alarm parameter acquiring unit 302 is configured for acquiring an alarm parameter corresponding to a current alarm, meaning when the alarm triggering interface unit 40 identifies abnormality of a specific preset business item, the alarm parameter acquiring unit 302 acquires an abnormality parameter that causes the alarm and transmits the abnormality parameter as an alarm parameter to the alarm-notifying object to notify the responsible person of a specific cause that leads to the alarm, facilitating abnormality handling by the responsible person.

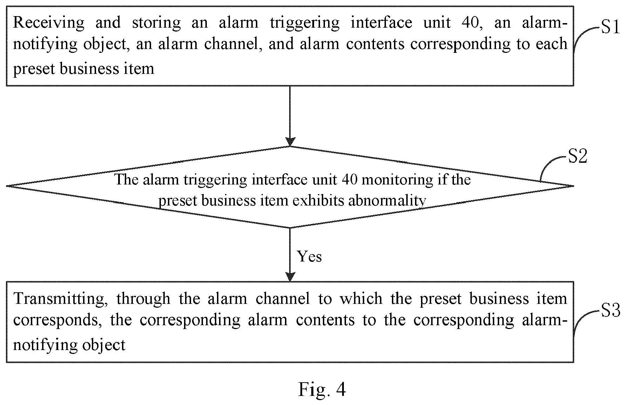

In a preferred embodiment, referring to FIG. 4, a business system automatic alarm method comprises the following steps:

S1, receiving and storing an alarm triggering interface unit 40, an alarm-notifying object, an alarm channel, and alarm contents corresponding to each preset business item.

Specifically, in the instant embodiment, the business system automatic alarm device comprises an alarm-notifying object receiving unit 10, an alarm channel receiving unit 20, an alarm content receiving unit 30, and an alarm triggering interface unit 40. One alarm-notifying object receiving unit 10, one alarm channel receiving unit 20, one alarm content receiving unit 30, and one alarm triggering interface unit 40 jointly form one automatic alarm device, and in the same automatic alarm device, the alarm-notifying object receiving unit 10, the alarm channel receiving unit 20, the alarm content receiving unit 30, and the alarm triggering interface unit 40 correspond to each other. A business system may include multiple automatic alarm devices.

The alarm-notifying object receiving unit 10 is configured for defining an alarm-notifying object, meaning a user may input an alarm-notifying object by means of the alarm-notifying object receiving unit 10. The alarm channel receiving unit 20 is configured for defining an alarm channel, meaning the user may input an alarm channel by means of the alarm channel receiving unit 20. The alarm content receiving unit 30 is configured for receiving alarm contents, meaning the user may input alarm contents by means of the alarm content receiving unit 30. The alarm triggering interface unit 40 is configured for monitoring if a preset business item exhibits abnormality, meaning the user may set up a preset business item to be monitored by means of the alarm triggering interface unit 40, and each preset business item corresponds one alarm triggering interface unit 40. Defining and storing the alarm-notifying object, the alarm channel and the alarm contents to which each preset business item corresponds allows the business system to include multiple preset business items. A corresponding relationship between each preset business item and the alarm-notifying object, the alarm channel, and the alarm contents is stored in a storage unit. In other words, a corresponding relationship of each alarm triggering interface unit 40 and the alarm-notifying object, the alarm channel, and the alarm contents is stored in the storage unit.

S2, the alarm triggering interface unit 40 monitoring if the preset business item exhibits abnormality. Each preset business item includes an alarm triggering interface unit 40 corresponding thereto, and conditions for determining whether or not the preset business item exhibits abnormality can be set up according to a specific requirement.

S3, if the alarm triggering interface unit 40 identifies the preset business item exhibits abnormality, transmitting, through the alarm channel to which the preset business item corresponds, the corresponding alarm contents to the corresponding alarm-notifying object.

Specifically, the alarm triggering interface unit 40, when identifying that a specific preset business item is abnormal, reads the alarm-notifying object, the alarm channel and the alarm contents to which the preset business item corresponds from the storage unit, meaning reading the alarm-notifying object, the alarm channel, and the alarm contents to which the alarm triggering interface unit 40 corresponds from the storage unit. After the alarm-notifying object, the alarm channel, and the alarm contents to which the preset business item corresponds have been read, the corresponding alarm contents are transmitted to the corresponding alarm-notifying object through the alarm channel to which the preset business item corresponds. In other words, the alarm-notifying object, the alarm channel, and the alarm contents to which the preset business item corresponds are such that the alarm contents corresponding to the preset business item are uploaded to the alarm channel and then transmitted to the alarm-notifying object.

The instant embodiment uses a unified and configurable automatic alarm device to define the alarm-notifying object and the alarm channel for each business item, so as to realize unified and standardized management for business alarm and enhance management efficiency.

In a preferred embodiment, the alarm-notifying object includes a self-defined object and a default object. The self-defined object is a required individualized object for each preset business item; and the default object is an object to which each alarm of the preset business item must be transmitted. Optionally, the alarm-notifying object further includes an ultimate transmitting object. In case that the user does not set up the self-defined object unit 101 and the default object unit 102, the ultimate transmitting object serves as an alarm-notifying object. In other words, in case that the user does set up the self-defined object unit 101 and the default object unit 102, the ultimate transmitting object does not serve as an alarm-notifying object, and alarms, when happening, will not be transmitted to the ultimate transmitting object. The instant embodiment suits the needs of the user for individualization of the alarm-notifying object, and also keeps a bottom-lime alarm-notifying object, even when no setting is made by the user, so as to ensure each alarm can be notified to a corresponding responsible person.

In a preferred embodiment, the alarm channel comprises a mail address and a mail template. In Step S3, transmitting, through the alarm channel to which the preset business item corresponds, the corresponding alarm contents to the corresponding alarm-notifying object comprises: transmitting, through the mail address and the mail template to which the preset business item corresponds, the corresponding alarm contents to the corresponding alarm-notifying object, meaning the alarm contents are filled according to the mail template, and after the filling is completed, transmission is made to the alarm-notifying object according to the mail address.

In a preferred embodiment, the alarm channel comprises a short message address and a short message template. In Step S3, transmitting, through the alarm channel to which the preset business item corresponds, the corresponding alarm contents to the corresponding alarm-notifying object comprises: transmitting, through the short message address and the short message template to which the preset business item corresponds, the corresponding alarm contents to the corresponding alarm-notifying object, meaning the alarm contents are filled according to the short message template, and after the filling is completed, transmission is made to the alarm-notifying object according to the short message address.

In a preferred embodiment, the alarm contents include an alarm parameter corresponding to a current alarm. Specifically, the alarm content receiving unit 30 comprises an alarm template 301 and an alarm parameter acquiring unit 302, wherein the alarm template 301 provides an alarm content fill-in template; and the alarm parameter acquiring unit 302 is configured for acquiring an alarm parameter corresponding to a current alarm, meaning when the alarm triggering interface unit 40 identifies abnormality of a specific preset business item, the alarm parameter acquiring unit 302 acquires an abnormality parameter that causes the alarm and transmits the abnormality parameter as an alarm parameter to the alarm-notifying object to notify the responsible person of a specific cause that leads to the alarm, facilitating abnormality handling by the responsible person.

In a preferred embodiment, a computer apparatus comprises a business system automatic alarm device described in the above embodiments.

In a preferred embodiment, the computer apparatus comprises a processor and a storage. The storage stores a computer program, and the processor executes the computer program stored in the storage, in order to implement a business system automatic alarm method described in the above embodiments.

A progressive way is adopted to illustrate various embodiments of the disclosure. The description of each embodiment focuses on key features that are different from those of other embodiments. Similar parts of the various embodiments may refer to each other. For the devices disclosed in the embodiments, since they are corresponding to the methods disclosed in the embodiments, and the descriptions thereof are relatively simplified, and the related parts may refer to the descriptions of the methods.

Skilled artisans may further notice that the units and method steps of each example of the embodiments disclosed in this disclosure can be implemented in hardware or computer software or a combination of the two. To clearly illustrate the exchangeability of hardware and software, the illustration provided above demonstrates the components and steps of each example with a general description according to functions thereof. Whether such functions can be implemented with hardware or software is determined by the specific application and design requirement conditions of the technical solution. Skilled artisans may adopt different ways to implement the functions so described for each specific application, and such implementations should not be regarded as exceeding the scope of the present invention.

The steps of the method or algorithm described with reference to the embodiments disclosed in the disclosure can be implemented directly by means of hardware, or by means of software modules executable in a processor, or a combination of the two. The software modules may be loaded in a random access memory (RAM), an internal storage, a read only memory (ROM), an electrically programmable ROM, an electrically erasable ROM, a register, a hard disc drive, a mobile magnetic drive, a CD-ROM, or any other forms of storage medium known in the field.

The embodiments provided above are only for illustration of the technical thoughts and features of the present invention, for the purposes to help those skilled in the art to understand the contents of the present invention and to accordingly put into practice, and should not be construed as limiting to the scope of protection for the present invention. All variations and modifications that are considered equivalent to the scope of the appended claims of the application belong to the scope of the present invention as defined solely by the appended claims.

## Claims

1. A business system automatic alarm device, **characterized by** comprising an alarm-notifying object receiving unit (10), an alarm channel receiving unit (20), an alarm content receiving unit (30), and an alarm triggering interface unit (40);
the alarm-notifying object receiving unit (10) configured for defining an alarm-notifying object, the alarm channel receiving unit (20) configured for defining an alarm channel, the alarm content receiving unit (30) configured for receiving alarm contents, the alarm triggering interface unit (40) configured for monitoring if a preset business item exhibits abnormality, each said preset business item corresponding to one alarm triggering interface unit (40);
the alarm-notifying object, the alarm channel, and the alarm contents to which each said preset business item corresponds being defined and stored, such that when the alarm triggering interface unit (40) identifies abnormality exhibited in said preset business item, the corresponding alarm contents are transmitted to the corresponding alarm-notifying object through the alarm channel to which said preset business item corresponds.

2. The business system automatic alarm device according to claim 1, **characterized in that** the alarm-notifying object receiving unit (10) comprises a self-defined object unit (101) and a default object unit (102);
the self-defined object unit (101) configured for defining a self-defined object of each said preset business item;
the default object unit (102) configured for defining a default object to which each alarm of said preset business item must be transmitted.

3. The business system automatic alarm device according to claim 2, **characterized in that** the alarm-notifying object receiving unit (10) further comprises an ultimate object unit (103), the ultimate object unit (103) storing an ultimate transmitting object;
in case that a user does not set up the self-defined object unit (101) and the default object unit (102), the ultimate transmitting object serving as an alarm-notifying object.

4. The business system automatic alarm device according to claim 1, **characterized in that** the alarm channel receiving unit (20) comprises a mail receiving unit (201), the mail receiving unit (201) configured for receiving a mail address and a mail template of the alarm-notifying object; and/or
the alarm channel receiving unit (20) comprises a short message receiving unit (202), the short message receiving unit (202) configured for receiving a short message address and a short message template of the alarm-notifying obj ect.

5. The business system automatic alarm device according to claim 1, **characterized in that** the alarm content receiving unit (30) comprises an alarm template (301) and an alarm parameter acquiring unit (302);
the alarm template (301) providing an alarm content fill-in template;
the alarm parameter acquiring unit (302) configured for acquiring an alarm parameter corresponding to a current alarm.

6. A business system automatic alarm method, **characterized by** comprising:
S 1, receiving and storing an alarm triggering interface unit (40), an alarm-notifying object, an alarm channel, and alarm contents corresponding to each preset business item;
S2, the alarm triggering interface unit (40) monitoring if the preset business item exhibits abnormality; and
S3, if yes, transmitting, through the alarm channel to which said preset business item corresponds, the corresponding alarm contents to the corresponding alarm-notifying object.

7. The business system automatic alarm method according to claim 6, **characterized in that** the alarm-notifying object comprises a self-defined object and a default obj ect;
the self-defined object being a required individualized object for each said preset business item;
the default object being an object to which each alarm of said preset business item must be transmitted.

8. The business system automatic alarm method according to claim 7, **characterized in that** the alarm-notifying object further comprises an ultimate transmitting object;
in case that a user does not set up the self-defined object and the default object, the ultimate transmitting object serving as an alarm-notifying object.

9. The business system automatic alarm method according to claim 5, **characterized in that** the alarm channel comprises a mail address and a mail template, and in Step S3, transmitting, through the alarm channel to which said preset business item corresponds, the corresponding alarm contents to the corresponding alarm-notifying object comprises: transmitting, through the mail address and the mail template to which aid preset business item corresponds, the corresponding alarm contents to the corresponding alarm-notifying object; and/or
the alarm channel comprises a short message address and a short message template, and in S3, transmitting, through the alarm channel to which said preset business item corresponds, the corresponding alarm contents to the corresponding alarm-notifying object comprises: transmitting, through the short message address and the short message template to which aid preset business item corresponds, the corresponding alarm contents to the corresponding alarm-notifying object;
the alarm contents comprising an alarm parameter corresponding a current alarm.

10. A computer apparatus, **characterized by** comprising the business system automatic alarm device according to any one of claims 1-5; or
the computer apparatus comprising a processor and a storage, the storage storing a computer program, the processor executing the computer program stored in the storage, in order to implement the business system automatic alarm method according to any one of claims 6-9.
